(19) **Europäisches Patentamt European Patent Office Office européen des brevets**

(11) **EP 3 948 680 B1**

(12) **EUROPEAN PATENT SPECIFICATION**

(45) Date of publication and mention
of the grant of the patent:
**08.07.2026 Bulletin 2026/28**

(21) Application number: **20728458.9**

(22) Date of filing: **22.05.2020**

(51) International Patent Classification (IPC):
**G06N 3/045** (2023.01)  **G06N 3/0442** (2023.01)
**G06N 3/09** (2023.01)  **G06N 3/092** (2023.01)
**G06N 3/0464** (2023.01)  **G06N 3/084** (2023.01)

(52) Cooperative Patent Classification (CPC):
**G06N 3/0442; G06N 3/045; G06N 3/09;**
**G06N 3/092;** G06N 3/0464; G06N 3/084

(86) International application number:
**PCT/EP2020/064286**

(87) International publication number:
**WO 2020/234457 (26.11.2020 Gazette 2020/48)**

(54) **NEURAL NETWORK-BASED MEMORY SYSTEM WITH VARIABLE RECIRCULATION OF QUERIES USING MEMORY CONTENT**

AUF EINEM NEURONALEN NETZWERK BASIERTES SPEICHERSYSTEM MIT VARIABLER RÜCKFÜHRUNG VON ABFRAGEN UNTER VERWENDUNG VON SPEICHERINHALT

SYSTÈME DE MÉMOIRE À BASE DE RÉSEAU NEURONAL AVEC RECIRCULATION VARIABLE DES INTERROGATIONS EN UTILISANT LE CONTENU DE LA MÉMOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2019 US 201962852214 P**

(43) Date of publication of application:
**09.02.2022 Bulletin 2022/06**

(73) Proprietor: **GDM Holding LLC**
**Mountain View, CA 94043 (US)**

(72) Inventors:
• **BANINO, Andrea**
**London N1C 4AG (GB)**
• **BLUNDELL, Charles**
**London N1C 4AG (GB)**
• **BADIA, Adrià Puigdomènech**
**London N1C 4AG (GB)**
• **KOSTER, Raphael**
**London N1C 4AG (GB)**
• **KUMARAN, Sudarshan**
**London N1C 4AG (GB)**

(74) Representative: **Marks & Clerk GST**
**1 New York Street**
**Manchester M1 4HD (GB)**

(56) References cited:
• **HENAFF MIKAEL ET AL: "Tracking the world state with recurrent entity networks", 10 May 2017 (2017-05-10), arXiv.org, pages 1 - 15, XP093073574, Retrieved from the Internet <URL:https://arxiv.org/pdf/1612.03969.pdf> [retrieved on 20230814]**
• **XINWEI GENG ET AL: "Adaptive Multi-pass Decoder for Neural Machine Translation", PROCEEDINGS OF THE 2018 CONFERENCE ON EMPIRICAL METHODS IN NATURAL LANGUAGE PROCESSING, 1 January 2018 (2018-01-01), Stroudsburg, PA, USA, pages 523 - 532, XP055720998, DOI: 10.18653/v1/D18-1048**
• **THOMAS HARTVIGSEN: "Adaptively-Halting RNN for Tunable Early Classification of Time Series", 11 November 2018 (2018-11-11), pages 1 - 44, XP055721042, Retrieved from the Internet <URL:https://digitalcommons.wpi.edu/ etd-theses/1257/> [retrieved on 20200807]**

- NITISH SRIVASTAVA ET AL: "Unsupervised Learning of Video Representations using LSTMs", 4 January 2016 (2016-01-04), XP055368326, Retrieved from the Internet <URL:https://arxiv.org/pdf/1502.04681.pdf> [retrieved on 20170428]

- MOSTAFA DEHGHANI ET AL: "Universal Transformers", 5 March 2019 (2019-03-05), arXiv.org, pages 1 - 23, XP055721044, Retrieved from the Internet <URL:https://arxiv.org/pdf/1807.03819.pdf> [retrieved on 20200807]

**Description**

BACKGROUND

This specification relates to neural network-based memory systems with variable recirculation of queries using memory content during retrieval.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters. Some neural networks are recurrent neural networks. A recurrent neural network is a neural network that receives an input sequence and generates an output sequence from the input sequence. In particular, a recurrent neural network uses some or all of the internal state of the network after processing a previous input in the input sequence in generating an output from the current input in the input sequence.

Geng et al. "Adaptive Multi-pass Decoder for Neural Machine Translation", Proc. 2018 Conference on Empirical Methods In Natural Language Processing, 1 January 2018, pages 523-532, describes a neural machine translation system that includes a multi-pass decoder and a policy network that automatically chooses a suitable and effective number of decoding passes.

SUMMARY

This specification describes a system comprising one or more computers and one or more storage devices storing instructions that when executed by the one or more computers cause the one or more computers to implement a neural network based memory system.

The manner in which memories are retrieved, which involves recirculation of queries using memory content during retrieval, facilitates connecting knowledge items stored in different memory slots, and hence may be useful for relational reasoning tasks using the stored memories. Some implementations of the system control the number of times memories and queries are recirculated, and hence a degree of relational reasoning.

The invention is set out in claim 1; further aspects are defined in the dependent claims.

The output system may comprise an output neural network to process the query result to generate the memory system output.

In implementations the controller neural network is configured to receive observations from the iterative memory retrieval system and has a halting control output. The halting control output may output halting data each time step e.g. data defining a probability of halting at the time step (i.e. defining a stochastic halting policy), or a binary value directly defining whether or not the iterative memory retrieval system should halt at the time step (defining a stochastic halting policy). The observations may, separately or collectively, define a change in the query result between successive time steps. The controller may be configured to halt the iterative memory retrieval system using the halting control output to control the number of time steps performed until the final time step, e.g. by sampling a halting action according to the defined probability of halting.

The observations at each time step may define a change in query result between time steps. For example the observations may comprise a measure of a change in the set of weights between a current time step and the previous time step, e.g. a distance metric between the weights such as a Bhattacharyya distance. Also or instead the observations at each time step may comprise one or more of: the current query at the current time step; the current query from the previous time step; a value dependent on change in the current query between time steps; the current set of weights; the previous set of weights; a count of a number of time steps taken so far e.g. a time step count starting at $t = 0$, optionally encoded as a one-hot vector.

In implementations the controller comprises a reinforcement learning controller neural network subsystem. The reinforcement learning controller neural network subsystem may comprise one or more recurrent neural network layers e.g. a GRU (gated recurrent unit) layer; these may be followed by one or more output layers, e.g. an MLP (multilayer perceptron).

Then the halting control output may be generated from a halting control policy signal which defines a probability of halting the iterative memory retrieval system. The reinforcement learning controller neural network subsystem may in general implement any type of reinforcement learning technique e.g. a policy-gradient based model-free reinforcement learning technique such as REINFORCE, or an (Advantage) Actor Critic technique or a Q-learning technique.

The neural network based memory system may also include a training engine to train the reinforcement learning controller neural network subsystem using the reinforcement learning technique with a loss function. The loss function may include a term dependent upon a count of a number of time steps taken until the final time step, to encourage minimization of the number of iterations.

The reinforcement learning controller neural network subsystem may be configured to estimate a time-discounted return resulting from halting the iterative memory retrieval system at a time step, and the loss function may be dependent upon the time-discounted return. During training, a correct memory system output may provide a positive reward and an incorrect output a zero reward.

In implementations of the reinforcement learning technique the loss function is further dependent upon a value estimate generated by the reinforcement learning controller neural network subsystem for the time step. The reinforcement learning technique may be REINFORCE (Williams, Machine learning, 8(3-4):229-256, 1992); this may be configured to estimate a state value function (a predicted return as a result of the halting in accordance with a current halting policy) to provide a baseline for determining updates during training, to reduce a variance of the updates.

For example, the training engine may train the controller neural network using gradients of a reinforcement learning objective function $L_{RL}$ given by:

$$\mathcal{L}_{RL} = \mathcal{L}_{\pi} + \alpha \mathcal{L}_V + \beta \mathcal{L}_{Hop}$$

$$\mathcal{L}_{\pi} = -\mathbb{E}_{s_t \sim \pi}\left[\widehat{R}_t\right]$$

$$\mathcal{L}_V = \mathbb{E}_{s_t \sim \pi}\left[\left(\widehat{R}_t - V(s_t, \theta)\right)^2\right]$$

$$\mathcal{L}_{Hop} = -\mathbb{E}_{s_t \sim \pi}[\pi(\cdot \,|s_t, \theta)]$$

where $\alpha$ and $\beta$ are positive constant values, $\mathbb{E}_{s_t \sim \pi}[\cdot]$ refers to the expected value with respect to the halting policy (i.e., defined by the current values of the controller neural network parameters $\theta$), $V(s_t, \theta)$ refers to the value estimate generated by the controller neural network for observation $s_t$, and $\widehat{R}_t$ refers to the n-step look-ahead return, e.g., given by:

$$\widehat{R}_t = \sum_{i=1}^{n-1} \gamma^i r_{t+i} + \gamma^n V(s_{t+n}, \theta)$$

where $\gamma$ is a discount factor between 0 and 1, $r_{t+i}$ is the reward received at time step t + $i$, and $V(s_{t+n}, \theta)$ refers to the value estimate at time step t + $n$.

In some implementations the system, in particular the iterative memory retrieval system, is configured to determine a key-value pair representing each of the knowledge items. The soft attention subsystem may be configured to determine a similarity measure, e.g. to form a dot product, between the current query, e.g. a current query vector, and the key for each slot to determine the set of soft attention values. The query update subsystem may be configured to apply the set of weights to the values representing the knowledge items in each of the memory slots to determine the query result.

In implementations the iterative memory retrieval system is configured to apply respective (learnt, e.g. linear) key and value projection matrices to the representation of the knowledge item in a memory slot to determine the key-value pair representing the knowledge item in the memory slot. The iterative memory retrieval system may similarly apply a (learnt, e.g. linear) query projection matrix to the input query to provide an encoded query. The encoded query may be used as the current query for at the initial time step.

The system may include an encoder neural network subsystem to encode the knowledge items into the representations of the knowledge items. An encoded knowledge item may have multiple elements, in which case each element may be encoded and stored separately in the slot for the knowledge item. Keeping the elements separate from one another within a slot can facilitate relational reasoning using the elements. The encoded knowledge items or elements may be from multiple input modalities.

There is also described a method of training the computer-implemented neural network based memory system. The method comprises training the reinforcement learning controller neural network subsystem using a reinforcement learning method to control the number of time steps performed by the iterative memory retrieval system until the final time step.

The training comprises, at each of a plurality of training iterations: obtaining an observation of the iterative memory retrieval system, wherein the observation defines a change in the query result between a current time step and a previous time step; processing the observation using the reinforcement learning controller neural network subsystem, and in accordance with current values of parameters of the controller neural network, to generate a halting control policy signal e.g. a signal which defines a probability of the binary options of halting or not halting the iterative memory retrieval system; determining a gradient based on e.g. the halting control policy signal, an actual return over one or more the time steps, and a value dependent upon a number of time steps taken to the current time step (where the actual return may be dependent upon the memory system output being correct for one or more of the current/future time steps; and then adjusting values of the of parameters of the controller neural network using the gradient e.g. by backpropagation.

The method may further comprise training the soft attention subsystem and query update subsystem (and projection matrices) using a supervised training technique e.g. by backpropagating gradients of any suitable loss function e.g. a cross-entropy loss.

In implementations, during the training the gradients of the respective loss functions are not shared between the controller and the soft attention subsystem and query update subsystem, e.g. during reinforcement learning the gradients are not used to adjust values of the (trained) neural network based memory system. Training of the controller and memory may be performed separately e.g. so that there is a stationary target for the reinforcement learning training, or jointly.

The subject matter described in this specification can be implemented in particular embodiments so as to realize one or more of the following advantages.

The described neural network-based memory systems can be used with any sort of data; some example applications are described later.

The systems are useful for connecting knowledge items stored in different memory slots, and can thus integrate stored memories better than some other techniques. This allows the system to more easily identify relationships between stored knowledge items, and to perform reasoning over these items. This allows the system to perform a visual question answering task faster, with less memory, reduced computing resources, and more accurately than previously.

For example a set of logical relationships may be defined, for example by encoding a visual of these and storing the encoded results in memory. The system may then be queried about relationships not explicitly represented in the memory. Thus the system may be used to perform question answering, using questions in speech, text and/or visual form. In some cases the system can perform complex tasks which other techniques cannot.

For example in some applications the memory system may be used as a component of a smart speaker device, implemented locally and/or on a remote server. Such a device may have a speech recognition front end to provide an input query for interrogating the memory; the answer (memory system output) may be provided in any suitable form, e.g. decoded and output as speech or text in a natural language.

As previously described some implementations of the system control the number of times memories and queries are recirculated, and hence a degree of relational reasoning. Implementations of the system may learn to control the number of times memories and queries are recirculated. This can further improve computational and memory use efficiency, hence allowing tasks to be performed with reduced computational resources and/or faster, and potentially using less memory.

The details of one or more embodiments of the subject matter of this specification are set forth in the accompanying drawings and the description below.

BRIEF DESCRIPTION OF THE DRAWINGS

FIG. 1 is a block diagram of an example of a neural network based memory system.
FIG. 2 is a flow diagram of an example process for storing representations of knowledge items.
FIG. 3 is a flow diagram of an example process for retrieving stored information.
FIG. 4 is a flow diagram of an example process for training the neural network based memory system.
FIG. 5 illustrates an example task which may be performed by the neural network based memory system.

Like reference numbers and designations in the various drawings indicate like elements.

DETAILED DESCRIPTION

This specification describes a computer implemented, neural network based memory system for storing items of knowledge and for retrieving knowledge items based on a query. More specifically the system is able to link multiple knowledge items so that a query based on one of the knowledge items can retrieve one or more knowledge items indirectly connected to the query. Thus implementations of the system can perform relational reasoning amongst the knowledge items.

For example, a query might identify one knowledge item in a sequence and a memory system output from the system might be a later knowledge item in the sequence; or a query might identify two nodes in a graph and the memory system output might identify a shortest path between the nodes; or the knowledge items may represent a set of statements, the query a question, and the memory system output an answer to the question inferred from the statements.

There is a variety of known architectures in which a neural network is coupled to memory and with enough memory, a sufficiently large model, and enough computational steps, these may be applied to small problems. However as the problem complexity increases the training time and inferential computation time become prohibitive. Implementations of the described system address this problem, and as well as using an efficient architecture adapt the computation time to the complexity of the problem to be solved.

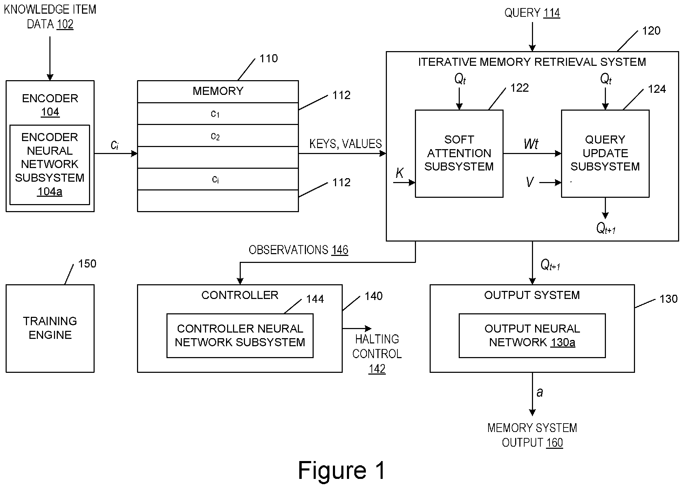

FIG. 1 shows an example of a neural network based memory system 100. The memory system 100 is an example of a system implemented as computer programs on one or more computers in one or more locations, in which the systems, components, and techniques described below can be implemented.

The memory system is configured to receive knowledge item data 102 for a set of knowledge items. An encoder 104 is configured to encode each knowledge item into a common embedding $c_i$. The embedding is common in the sense that each knowledge item is represented in the same embedding space.

Each common embedding is stored in a "slot" 112, or portion, of a memory 110. Thus in implementations memory 110 stores a representation of each knowledge item in a separately identifiable portion of memory. As described later each common embedding is used to derive a respective key and value pair. Alternatively the key and value pairs may be stored in the memory 110 instead of the common embeddings.

A knowledge item, $x_i$, of a set of I knowledge items may comprise a tensor of order 0, 1, 2 or greater. For example a knowledge item, $x_i$, may comprise an $S \times O$ matrix which defines a set or sequence of $S$ entities, each entity represented by a vector of length $O$. The encoder 104 may be configured to encode each knowledge item, $x_i$, into the common embedding $c_i$, which may have dimensions $S \times d_c$. For example, the encoder 104 may apply a learned embedding matrix $W_c$, with dimensions $O \times d_c$, to determine $c_i = x_i W_c$. The common embedding $c_i$ may be stored in a memory "slot" as a vector with $S \times d_c$ elements. Here a memory "slot" may be a region of memory for storing a tensor e.g. a vector. There may be a defined total number, $I$, of knowledge items; unused portions of a knowledge item, e.g. for entities which are not present, and/or unused memory slots, may be padded with zeros. The memory 110 may store representations of multiple sets of knowledge items.

In some implementations the encoder 104 includes an encoder neural network subsystem 104a, which may comprise a convolutional and/or recurrent neural network to encode knowledge item data provided in the form of image data. For example an entity may represent an image, and image data for each image of a set of images may be converted into a numeric representation of the image by a (pre-trained) image processing neural network such as a ResNet (arXiv:1512.03385). The knowledge items may then comprise sets of images, and these may then be encoded into the common embedding. In some implementations a time e.g. time stamp or other encoding may be included in the memory with the common encoding of each knowledge item, to preserve temporal context.

The memory system 100 is further configured to receive an input query 114. The input query may have the same modality as the knowledge items (image data). In implementations the input query 114 is mapped to a d-dimensional vector defining an initial current query vector $q_0$, i.e. a current query vector for time step $t = 0$, as described further below, for iteratively querying the memory. An input query may have a fixed size (input dimension), in which case a smaller query may be padded with zeros to the fixed size.

An input query may specify a question to be answered using the representations of the knowledge items stored in the memory, in particular using the relationships between these knowledge items. The memory system provides a mechanism for establishing a chain of relational reasoning based upon the representations of the knowledge items stored in the memory in response to a query, and for providing an answer to the query.

The memory system 100 includes an iterative memory retrieval system 120 and an output system 130, to iteratively process the input query 114 as described further below to generate a memory system output 160. Broadly, at each of a sequence of time steps the current query is applied to the memory to read data from the memory, which is then used to update the query with new information to provide the current query for the next time step. Thus the current query accumulates data from each time step, and an attention mechanism moves attention over the slots to read relevant information based on relationships between the knowledge items. At the end of the sequence of time steps the current query holds information relating to an answer to the query, $a$, which is processed by the output system 130 to provide the answer as the memory system output 160. In some implementations the answer $a$ is generated by combining information from the current query at each time step. The memory system 100 is trained using known answers to queries.

As one example a query may identify one or more images in a sequence and require another image in the sequence to be identified by the answer.

The memory system 100 includes a controller 140 configured to control the iterative querying of the memory 110. More specifically, the controller 140 receives observations 146 from the iterative memory retrieval system 120, and provides a halting control output 142 which controls when the iterative querying process halts and the answer is to be provided. The halting control output may comprise a binary value sampled from a probability distribution defined by a halting policy, $\pi$. In implementations one or more parameters of the probability distribution defined by the halting policy are generated by a controller neural network subsystem 144, which is trained by reinforcement learning. In implementations the controller neural network subsystem 144 is trained with an objective which encourages the iterative querying process to halt after a minimum number of steps needed for a correct answer. Thus the memory system 100 is trained to perform an estimated minimum computation necessary to provide the answer.

A training engine 150 controls training of the memory system 100; this is not needed after training when the memory system is used to retrieve answers to queries. The memory system 100 is trained by adjusting parameters of the system using back propagation of gradients of objective functions. In implementations separate objective functions are used for training the controller 140 and for training the remainder of the memory system 100 and there is no sharing of gradients between these parts of the system. Training of the memory system 100 is described in more detail later.

The iterative memory retrieval system 120 comprises a soft attention subsystem 122 and a query update subsystem 124. In implementations the soft attention subsystem 122 is configured to determine, from the current query $q_t$ at time step $t$, a set of weights, $w_t$, one for each of the set of memory slots. The set of weights may be determined from a set of soft attention values, $h_t^{(h)}$, derived by applying the current query to a set of keys, $K$, one key, $k_i$, for each memory slot. In some implementations the set of soft attention values, $h_t^{(h)}$, includes a weighted contribution from a set of soft attention values, $h_{t-1}^{(h)}$, from a previous time step. In some implementations multi-head attention is used, with $H$ heads. The current query may then be denoted $Q_t$ where each of $H$ rows of $Q_t$ comprises a vector defining a current query $q_t$ for a head.

The query update subsystem 124 may then apply the weights to values, $V$, derived from the representations of the knowledge items in the memory slots to determine a query result, which is processed to determine the current query for the next time step, $Q_{t+1}$. Thus the current query at a time step depends on the result of the query at the previous time step; the current query at a time step may also include the query at the previous time step. The query $Q_{t+1}$ is processed by a neural network 130a of the output system 130 to determine an answer $a_t$ for the time step t and the answers for each time step may then be combined to determine the final answer $a$ for the memory system output 160.

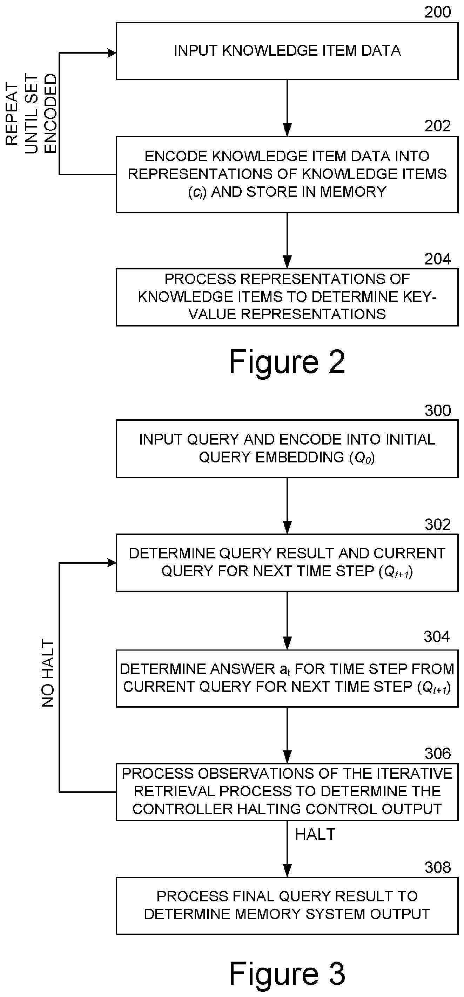

FIG. 2 shows a process which may be implemented by the memory system 100 to receive and store representations of knowledge items. At step 200 the process inputs knowledge item data 102 for a knowledge item, $x_i$ of a set of knowledge items. This is then encoded into a representation of the knowledge item, e.g. a common embedding $c_i$ as previously described, and stored in one of the memory slots 112 (step 202). The common embedding may be determined according to $c_i = x_i W_c$. The process repeats for knowledge item of the set.

Each common embedding may then be processed to determine a respective key and value (step 204) e.g. according to:

$$k_i = W_k vec(c_i)$$

$$v_i = W_v vec(c_i)$$

where, in the case that $c_i$ is a matrix, $vec(c_i)$ refers to the operation of flattening the matrix into a vector with the same number of elements (and $vec^{-1}(\cdot)$ is the inverse operation).

Each key $k_i$ and value $v_i$ may be a $d$-dimensional embedding vector, in which case $W_k$ and $W_v$ are matrices each of dimension $d \times Sd_c$. A set of keys $K$ for a set of $I$ knowledge items is then a matrix of dimension $I \times d$, and a set of values $V$ for the set of knowledge items similarly has dimension $I \times d$. Where multi-head attention is used, separate matrices $W_k$ and $W_v$ are provided for each head, and each head determines a respective set of keys and values.

Step 204 may instead be performed as a first step of the knowledge retrieval process of FIG. 3. The memory may store the keys and values as a representations of each knowledge item as well as or instead of the common embedding; the keys and values may be calculated once, or for each query or as needed.

FIG. 3 shows a process which may be implemented by the memory system 100 to retrieve stored information from the memory system 100 in response to an input query.

At step 300 an input query $q$ is encoded into a $d$-dimensional query embedding vector $q_0$, e.g. according to:

$$q_0 = W_q^{(h)} q$$

where $W_q^{(h)}$ is a matrix of dimension d $\times$ S. Where multi-head attention is used a separate matrix $W_q^{(h)}$ is provided for each head and the initial query may be denoted $Q_0$. In general, with $H$ attention heads a current query $Q_t$ may be a matrix of dimension $H \times d$.

At step 302 the initial query $Q_0$, or the current query $Q_t$ if the process has looped back, is processed to determine the query result and the current query for the next time step, $Q_{t+1}$. For example, the current query for the next time step, $Q_{t+1}$ may be determined according to:

$$h_t^{(h)} = \frac{1}{\sqrt{d}} W_h K^{(h)} q_t^{(h)}$$

$$w_t^{(h)} = DropOut\left(softmax\left(h_t^{(h)}\right)\right)$$

$$q_{t+1}^{(h)} = w_t^{(h)} V^{(h)}$$

$$Q_{t+1} = LayerNorm\left(vec^{-1}\left(W_q vec(Q_{t+1})\right) + Q_t\right)$$

where the superscript (*h*) denotes a particular attention head so that, for example, $q_t^{(h)}$ is a row of *Qt* for a particular attention head, and the rows of $Q_{t+1}$ are given by $q_{t+1}^{(h)}$, $W_h$ may be a matrix of dimension $I \times I$, and $W_q$ (which is different to $W_q^{(h)}$ above) may be a matrix of dimension *Hd* × *Hd*. The optional *DropOut*(·) function refers to dropout e.g. as described in Srivastava et al. Journal of Machine Learning Research 15 (2014) 1929-1958; the optional *LayerNorm*(·) function refers to layer normalization e.g. as described in arXiv:1607.06450.

The process then uses the current query for the next time step, $Q_{t+1}$ to determine the answer $a_t$ for the time step t, for example according to:

$$a_t = softmax\left(W_a DropOut\left(relu\left(W_{qa} vec(Q_{t+1})\right)\right)\right)$$

For example the answer $a_t$ may be a vector of dimension *O* in which case $W_a$ is a matrix of dimension $O \times d_a$, and $W_{qa}$ is a matrix of dimension $d_a \times Hd$ where $d_a$ is an intermediate dimension. In practice the answer $a_t$ may be determined from $Q_{t+1}$ by a neural network e.g. an MLP (multilayer perceptron).

As previously described, the controller 140 processes observations 146 from the iterative memory retrieval system 120 to provide a halting control output 142 (step 306). The observations may include a measure of a difference or distance, e.g. a Bhattacharyya distance, between the attention weights at two successive time steps for example between multi-head attention weights $W_t$ and $W_{t-1}$, $d(W_t, W_{t-1})$. The observations may also include the number of time steps taken so far, i.e. t, e.g. encoded as a one-hot vector. If the halting control output does not define a halt the process iterates by returning to step 302, otherwise the process continues to step 308. The process may also halt if a maximum number of time steps, e.g. 20 steps, has been reached.

At step 308 the process determines a final answer, *a*, at final time step *T* from the answer at each time step answer $a_t$, for example according to:

$$a = \sum_{t=1}^{T} p_t a_t$$

where $p_t$ is the halting probability at time step t which may be given by $p_t = \sigma(\pi_t)$ where $\pi_t$ is a halting policy output from the controller neural network subsystem 144 for time step t and $\sigma(\cdot)$ is a sigmoid function. The halting probability for the final time step *T* may be defined by a remainder probability, *R*, where $R = 1 - \sum_{t=1}^{T-1} p_t$. The halting control output 142 is determined stochastically according to the halting probability.

In one implementation the controller neural network subsystem 144 comprises a gated recurrent unit (GRU) followed by an MLP to provide the halting policy output $\pi_t$. For example the GRU may implement the update $z_t = GRU(z_{t-1}, d(Wt, Wt_{-1}), t)$ where *GRU* (·) is a GRU function and $z_t$ is an update vector. The policy $\pi_t$ at time step *t*, and an optional value function estimate $v_t$ used during training, may then be determined by $v_t, \pi_t = MLP(z_t)$, and $p_t = \sigma(\pi_t)$.

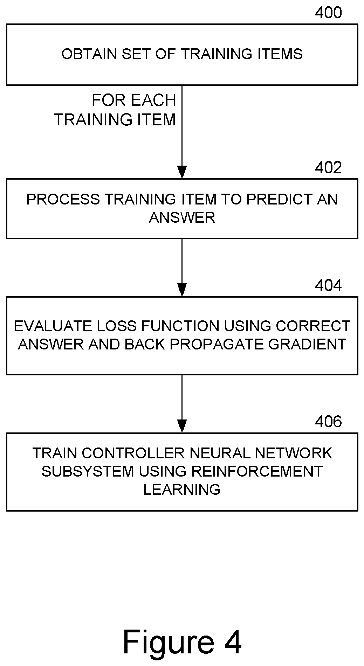

FIG. 4 shows a process which may be implemented by training engine 150 for training the memory system 100. At step 400 the process obtains a set of training items each comprising data for a set of knowledge items $x_i$, an input query $q_0$, and a correct answer. Each training item is processed as previously described, to store representations of the set of knowledge items in the memory, and to query the memory to produce a predicted final answer (step 402). The learnable parameters of the memory system, except for those of the controller 140, are then adjusted by back propagation of the gradient of a loss function, for example a cross-entropy loss, between the predicted answer and the correct answer (step 404). In implementations the learnable parameters adjusted comprise those of the embedding matrices for the common embedding $W_c$, for the keys and values and query, $W_k$, $W_v$, $W_q^{(h)}$, for the soft attention $W_h$, for the query construction $W_q$, and for determining the answers $W_a$, $W_{qa}$.

The controller 140 is trained by reinforcement learning (step 406), e.g. using the REINFORCE algorithm (Williams, R.J. "Simple statistical gradient-following algorithms for connectionist reinforcement learning", Mach Learn 8, 229-256, 1992). The reward at a time step $r_t$ may be 1 if the predicted final answer is correct and 0 otherwise and may be evaluated at the end of an episode of $T$ time steps where $T$ is the minimum time for which $\sum_{t=1}^{T} p_t \geq 1 - \epsilon$ where $\varepsilon$ is a small constant e.g. 0.01. The iteration process may be also stopped, and the reward evaluated, if a predetermined maximum number of time steps is reached.

The parameters of the controller neural network subsystem 144 may be adjusted using reinforcement learning to minimize an objective function $\mathcal{L}_{RL}$ comprising a term $\mathcal{L}_\pi$ dependent upon the reward, an optional term $\mathcal{L}_V$ dependent upon a baseline value function $V(s_t)$ of the observations $s_t$ at time step t, and a term $\mathcal{L}_{Hop}$ which encourages the iterative memory retrieval process to minimize the number of time steps taken to produce the predicted final answer. For example $\mathcal{L}_{RL} = \mathcal{L}_\pi + \alpha\mathcal{L}_V + \beta\mathcal{L}_{Hop}$ where $\alpha$ and $\beta$ are weights. In implementations the objective terms are as follows:

$$\mathcal{L}_\pi = -\mathbb{E}(\hat{R}_t)$$

$$\mathcal{L}_V = \mathbb{E}\left(\hat{R}_t - V(s_t)\right)$$

$$\mathcal{L}_{Hop} = -\mathbb{E}(\pi(s_t))$$

where $\hat{R}_t$ is an estimated n-step look ahead return estimate $\hat{R}_t = \Sigma_{i=0...n-1}\gamma^i r_{t+i}, + \gamma^n V(s_{t+n})$, $Y$ is a discount factor, and $s_t$ are the observations at time step t.

The $\mathcal{L}_{Hop}$ term minimizes the expected number of time steps because the expectation of a binary value is its probability, and the expectation of a sum of these is the sum of their expectations. During training a final layer of the MLP of the controller neural network subsystem 144 may be initialized with a bias that increases the changes that $\pi$ produces a probability of 1, i.e. of one more time step.

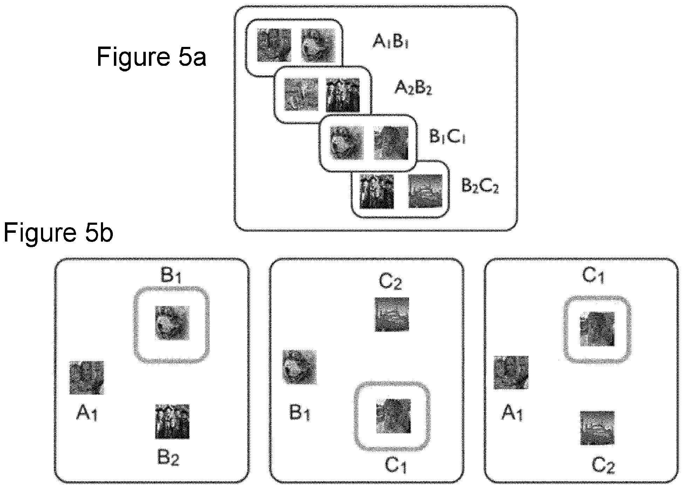

FIG. 5 shows one example of a task which may be performed by the memory system 100 to retrieve stored information from the memory system 100 in response to an image input query. In this example a set of knowledge items comprises images defining a sequence of three images, each knowledge item of the set including only two images of the sequence, the first and second (e.g. $A_1B_1$) or the second and third (e.g. $B_1C_1$). The images are represented by image embeddings generated by the encoder neural network subsystem 104a, and representations of multiple different sequences are stored in the memory.

Figure 5a shows some example knowledge items and Figure 5b some example queries. A query comprises an embedding of an image from a sequence (left) and embeddings of two other images (right), only one of which is from the sequence, and the task is to select the image belonging to the sequence (outlined in the figure). Implementations of the described system can correctly identify images from a sequence of five images, which other tested systems were not able to do. That is, implementations of the described system can infer long distance associations between stored items of knowledge.

Some further applications of the system are described below.

The memory-based neural network system may be part of a computer-assisted medical alert, diagnosis or treatment system. In another example the neural network system may be used in a generative or recurrent neural network system for image generation. The memory-based neural network system may be part of an image processing or classification system.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented neural network based memory system, comprising:

   an external memory (110) configured to receive and store representations of knowledge items, wherein the memory comprises a set of memory slots (112) each to store a representation of a respective knowledge item (102) in a compressed form;
   an iterative memory retrieval system (120) configured to iteratively generate a memory system output (160) by, at each of a succession of time steps, combining a current query derived from an input query (114) with data retrieved from the memory (110) at a previous time step;
   an output system (130) to determine the memory system output (160) from a query result generated by the iterative memory retrieval system (120) from applying the current query to the memory (110) at a final time step; and
   a controller (144) to control the number of time steps performed by the iterative memory retrieval system (120) until the final time step;
   wherein the iterative memory retrieval system (120) comprises:

   a soft attention subsystem (122) configured to determine from the current query a set of soft attention values, one for each of the set of memory slots (112), and to determine a set of weights for the set of memory slots (122) from a combination of the set of soft attention values; and a query update subsystem (124) to apply the set of weights to values derived from the representations of the knowledge items in the memory slots to determine the query result,
wherein the current query is defined by the input query at an initial time step and depends on the query result from the previous time step thereafter; and wherein

the memory stores encoded representations of images and the system is configured to use the memory system output to perform a visual question answering task, wherein the input query defines a question about relationships between the images that is not explicitly represented in the memory and the memory system output of the computer-implemented neural network based memory system defines an answer to the question.

2. The system of claim 1 wherein the controller (140) comprises a controller neural network subsystem (144) configured to receive observations (146) from the iterative memory retrieval system (120) and has a halting control output (142), wherein the observations (146) define a change in the query result between time steps, and wherein the controller (140) is configured to halt the iterative memory retrieval system (120), using the halting control output (142), to control the number of time steps performed until the final time step; and
wherein the observations (146) at each time step comprise a count of a number of time steps taken.

3. The system of any one of claims 1-2 wherein the controller (140) comprises a reinforcement learning controller neural network subsystem to define a probability of halting the iterative memory retrieval system (120) for the halting control output.

4. The system of claim 3 further comprising a training engine (150) to train the reinforcement learning controller neural network subsystem using a reinforcement learning technique with a loss function dependent upon a count of a number of time steps taken until the final time step; and optionally

wherein the reinforcement learning controller neural network subsystem is configured to estimate a time-discounted return resulting from halting the iterative memory retrieval system (120) at a time step, and wherein the loss function is dependent upon the time-discounted return; and optionally
wherein the reinforcement learning technique is a policy gradient-based reinforcement learning technique and wherein the loss function is further dependent upon a value estimate generated by the reinforcement learning controller neural network subsystem for the time step.

5. The system of any one of claims 1-4, configured to determine a key-value pair representing each of the knowledge items, wherein the soft attention subsystem is configured to determine a similarity measure between the current query and the key for each memory slot (112) to determine the set of soft attention values, and wherein the query update subsystem (124) is configured to apply the set of weights to the values representing the knowledge items in each of the memory slots (112) to determine the query result; and
wherein the iterative memory retrieval system (120) is configured to apply respective key and value projection matrices to the representation of the knowledge item in a memory slot (112) to determine the key-value pair representing the knowledge item in the memory slot (112).

6. The system of any one of claims 1-5 wherein the iterative memory retrieval system (120) is configured to apply a query projection matrix to the input query (114) to provide an encoded query, wherein the encoded query comprises the current query defined by the input query (114) at the initial time step.

7. The system of any one of claims 1-6, wherein the soft attention subsystem (112) comprises a soft attention neural network to process the set of soft attention values to determine the set of weights for the set of memory slots (112).

8. The system of any one of claims 1-7, wherein the output system (130) comprises an output neural network (130a) to process the query result to generate the memory system output (160).

9. The system of any one of claims 1-8, further comprising an encoder neural network subsystem (104a) to encode knowledge item data for the knowledge items into the representations of the knowledge items for storing into one of the memory slots (112).

10. The system of claim 9, wherein the encoder neural network subsystem (104a) comprises a convolutional neural network; and/or
wherein the encoder neural network subsystem (104a) comprises a recurrent neural network.

11. A computer-implemented method of training the system of any one of claims 3 or 4, or 5-10 when dependent on claim 3 or 4, the method comprising training the reinforcement learning controller neural network subsystem using a reinforcement learning method to control the number of time steps performed by the iterative memory retrieval system (120) until the final time step; and
wherein the training comprises, at each of a plurality of training iterations:

> obtaining an observation (146) of the iterative memory retrieval system (120), wherein the observation (146) defines a change in the query result between a current time step and a previous time step;
> processing the observation using the reinforcement learning controller neural network subsystem, and in accordance with current values of parameters of the reinforcement learning controller neural network subsystem, to generate a halting control policy signal;
> determining a gradient based on the halting control policy signal, an actual return over one or more of the time steps, and a value dependent upon a number of time steps taken to the current time step, where the actual return is dependent upon the memory system output (160) for one or more of the time steps; and
> adjusting values of the of parameters of the reinforcement learning controller neural network subsystem using the gradient.

12. A computer-implemented method of training the system of any one of claims 1-10, comprising training the soft attention subsystem (122) and query update subsystem (124) using a supervised training technique.

13. One or more computer storage media storing instructions that when executed by one or more computers cause the one or more computers to implement the system of any one of claims 1-10 or the method of any one of claims 11 or 12.

**Patentansprüche**

1. Computerimplementiertes, auf einem neuronalen Netzwerk basiertes Speichersystem, umfassend:

> einen externen Speicher (110), der konfiguriert ist, um Darstellungen von Wissenselementen zu empfangen und zu speichern, wobei der Speicher einen Satz von Speichersteckplätzen (112) umfasst, die jeweils eine Darstellung eines jeweiligen Wissenselements (102) in einer komprimierten Form speichern sollen;
> ein iteratives Speicherabrufsystem (120), das konfiguriert ist, um iterativ eine Speichersystemausgabe (160) zu generieren, indem in jedem einer Abfolge von Zeitschritten eine aus einer Eingabeabfrage (114) abgeleitete aktuelle Abfrage mit Daten kombiniert wird, die in einem vorherigen Zeitschritt aus dem Speicher (110) abgerufen wurden;
> ein Ausgabesystem (130), um die Speichersystemausgabe (160) aus einem Abfrageergebnis zu bestimmen, das von dem iterativen Speicherabrufsystem (120) durch Anwenden der aktuellen Abfrage auf den Speicher (110) in einem finalen Zeitschritt generiert wird; und
> eine Steuerung (144), um die Anzahl der durch das iterative Speicherabrufsystem (120) bis zu dem finalen Zeitschritt durchgeführten Zeitschritte zu steuern;
> wobei das iterative Speicherabrufsystem (120) Folgendes umfasst:

>> ein Soft-Attention-Subsystem (122), das konfiguriert ist, um aus der aktuellen Abfrage einen Satz von Soft-Attention-Werten zu bestimmen, einen für jeden des Satzes von Speichersteckplätzen (112), und um einen Satz von Gewichten für den Satz von Speichersteckplätzen (122) aus einer Kombination des Satzes von Soft-Attention-Werten zu bestimmen; und ein Abfrageaktualisierungssubsystem (124), um den Satz von Gewichten auf Werte anzuwenden, die aus den Darstellungen der Wissenselemente in den Speichersteckplätzen abgeleitet sind, um das Abfrageergebnis zu bestimmen, wobei die aktuelle Abfrage durch die Eingabeabfrage in einem anfänglichen Zeitschritt definiert ist und danach von dem Abfrageergebnis aus dem vorherigen Zeitschritt abhängt; und wobei
>> der Speicher codierte Darstellungen von Bildern speichert und das System konfiguriert ist, um die Speichersystemausgabe zu verwenden, um eine visuelle Fragenbeantwortungsaufgabe durchzuführen, wobei die Eingabeabfrage eine Frage über Beziehungen zwischen den Bildern definiert, die nicht explizit in dem Speicher dargestellt ist, und die Speichersystemausgabe des computerimplementierten, auf einem neuronalen Netzwerk basierten Speichersystems eine Antwort auf die Frage definiert.

2. System nach Anspruch 1, wobei die Steuerung (140) ein Steuerungs-Neuronales-Netzwerk-Subsystem (144) umfasst, das konfiguriert ist, um Beobachtungen (146) von dem iterativen Speicherabrufsystem (120) zu empfangen, und eine Anhalte-Steuerausgabe (142) aufweist, wobei die Beobachtungen (146) eine Änderung in dem Abfrageergebnis zwischen Zeitschritten definieren, und wobei die Steuerung (140) konfiguriert ist, um das iterative Speicherabrufsystem (120) unter Verwendung der Anhalte-Steuerausgabe (142) anzuhalten, um die Anzahl der bis zu dem finalen Zeitschritt durchgeführten Zeitschritte zu steuern; und

wobei die Beobachtungen (146) in jedem Zeitschritt eine Zählung einer Anzahl von unternommenen Zeitschritten umfassen.

3. System nach einem der Ansprüche 1-2, wobei die Steuerung (140) ein Reinforcement-Learning-Steuerungs-Neuronales-Netzwerk-Subsystem umfasst, um eine Wahrscheinlichkeit des Anhaltens des iterativen Speicherabrufsystems (120) für die Anhalte-Steuerausgabe zu definieren.

4. System nach Anspruch 3, ferner umfassend eine Trainings-Engine (150), um das Reinforcement-Learning-Steuerungs-Neuronales-Netzwerk-Subsystem unter Verwendung einer Reinforcement-Learning-Technik mit einer Verlustfunktion zu trainieren, die von einer Zählung einer Anzahl von bis zu dem finalen Zeitschritt unternommenen Zeitschritten abhängig ist; und optional

wobei das Reinforcement-Learning-Steuerungs-Neuronales-Netzwerk-Subsystem konfiguriert ist, um eine zeitdiskontierte Rendite zu schätzen, die aus dem Anhalten des iterativen Speicherabrufsystems (120) in einem Zeitschritt resultiert, und wobei die Verlustfunktion von der zeitdiskontierten Rendite abhängig ist; und optional wobei die Reinforcement-Learning-Technik eine Policy-Gradientbasierte Reinforcement-Learning-Technik ist und wobei die Verlustfunktion ferner von einer durch das Reinforcement-Learning-Steuerungs-Neuronales-Netzwerk-Subsystem für den Zeitschritt generierten Wertschätzung abhängig ist.

5. System nach einem der Ansprüche 1-4, das konfiguriert ist, um ein Schlüssel-Wert-Paar zu bestimmen, das jedes der Wissenselemente darstellt, wobei das Soft-Attention-Subsystem konfiguriert ist, um ein Ähnlichkeitsmaß zwischen der aktuellen Abfrage und dem Schlüssel für jeden Speichersteckplatz (112) zu bestimmen, um den Satz von Soft-Attention-Werten zu bestimmen, und wobei das Abfrageaktualisierungssubsystem (124) konfiguriert ist, um den Satz von Gewichten auf die die Wissenselemente in jedem der Speichersteckplätze (112) darstellenden Werte anzuwenden, um das Abfrageergebnis zu bestimmen; und

wobei das iterative Speicherabrufsystem (120) konfiguriert ist, um jeweilige Schlüssel- und Wertprojektionsmatrizen auf die Darstellung des Wissenselements in einem Speichersteckplatz (112) anzuwenden, um das das Wissenselement in dem Speichersteckplatz (112) darstellende Schlüssel-Wert-Paar zu bestimmen.

6. System nach einem der Ansprüche 1-5, wobei das iterative Speicherabrufsystem (120) konfiguriert ist, um eine Abfrageprojektionsmatrix auf die Eingabeabfrage (114) anzuwenden, um eine codierte Abfrage bereitzustellen, wobei die codierte Abfrage die durch die Eingabeabfrage (114) im anfänglichen Zeitschritt definierte aktuelle Abfrage umfasst.

7. System nach einem der Ansprüche 1-6, wobei das Soft-Attention-Subsystem (112) ein Soft-Attention-Neuronales-Netzwerk umfasst, um den Satz von Soft-Attention-Werten zu verarbeiten, um den Satz von Gewichten für den Satz von Speichersteckplätzen (112) zu bestimmen.

8. System nach einem der Ansprüche 1-7, wobei das Ausgabesystem (130) ein Ausgabe-Neuronales-Netzwerk (130a) umfasst, um das Abfrageergebnis zu verarbeiten, um die Speichersystemausgabe (160) zu generieren.

9. System nach einem der Ansprüche 1-8, ferner umfassend ein Encoder-Neuronales-Netzwerk-Subsystem (104a), um Wissenselementdaten für die Wissenselemente in die Darstellungen der Wissenselemente zum Speichern in einem der Speichersteckplätze (112) zu codieren.

10. System nach Anspruch 9, wobei das Encoder-Neuronales-Netzwerk-Subsystem (104a) ein neuronales Faltungsnetzwerk umfasst; und/oder
wobei das Encoder-Neuronales-Netzwerk-Subsystem (104a) ein Recurrent Neural Network umfasst.

11. Computerimplementiertes Verfahren zum Trainieren des Systems nach einem der Ansprüche 3 oder 4, oder 5-10, wenn abhängig von Anspruch 3 oder 4, wobei das Verfahren das Trainieren des Reinforcement-Learning-Steuerungs-Neuronales-Netzwerk-Subsystems unter Verwendung eines Reinforcement-Learning-Verfahrens umfasst, um die Anzahl von Zeitschritten zu steuern, die durch das iterative Speicherabrufsystem (120) bis zu dem finalen Zeitschritt durchgeführt werden; und

wobei das Trainieren in jeder einer Vielzahl von Trainingsiterationen Folgendes umfasst:

Erhalten einer Beobachtung (146) des iterativen Speicherabrufsystems (120), wobei die Beobachtung (146) eine Änderung im Abfrageergebnis zwischen einem aktuellen Zeitschritt und einem vorherigen Zeitschritt definiert;

Verarbeiten der Beobachtung unter Verwendung des Reinforcement-Learning-Steuerungs-Neuronales-Netzwerk-Subsystems und in Übereinstimmung mit aktuellen Werten von Parametern des Reinforcement-Learning-Steuerungs-Neuronales-Netzwerk-Subsystems, um ein Anhalte-Steuer-Richtliniensignal zu generieren;

Bestimmen eines Gradienten basierend auf dem Anhalte-Steuer-Richtliniensignal, einer tatsächlichen Rendite über einen oder mehrere der Zeitschritte, und einem Wert, der von einer Anzahl von bis zum aktuellen Zeitschritt unternommenen Zeitschritten abhängig ist, wobei die tatsächliche Rendite von der Speichersystemausgabe (160) für einen oder mehrere der Zeitschritte abhängig ist; und

Anpassen von Werten der Parameter des Reinforcement-Learning-Steuerungs-Neuronales-Netzwerk-Subsystems unter Verwendung des Gradienten.

12. Computerimplementiertes Verfahren zum Trainieren des Systems nach einem der Ansprüche 1-10, umfassend das Trainieren des Soft-Attention-Subsystems (122) und des Abfrageaktualisierungssubsystems (124) unter Verwendung einer überwachten Trainingstechnik.

13. Ein oder mehrere Computerspeichermedien, die Anweisungen speichern, die, wenn sie von einem oder mehreren Computern ausgeführt werden, den einen oder die mehreren Computer veranlassen, das System nach einem der Ansprüche 1-10 oder das Verfahren nach einem der Ansprüche 11 oder 12 zu implementieren.

**Revendications**

1. Système de mémoire à base de réseau neuronal mis en œuvre par ordinateur, comprenant :

une mémoire externe (110) configurée pour recevoir et stocker des représentations d'éléments de connaissance, dans lequel la mémoire comprend un ensemble d'emplacements de mémoire (112), chacun destiné à stocker une représentation d'un élément de connaissance respectif (102) sous une forme compressée ;

un système de récupération de mémoire itératif (120) configuré pour générer de manière itérative une sortie de système de mémoire (160) en combinant, à chacune d'une succession de pas de temps, une interrogation actuelle dérivée d'une interrogation d'entrée (114) avec des données récupérées à partir de la mémoire (110) à un pas de temps précédent ;

un système de sortie (130) pour déterminer la sortie de système de mémoire (160) à partir d'un résultat d'interrogation généré par le système de récupération de mémoire itératif (120) à partir de l'application de l'interrogation actuelle à la mémoire (110) à un pas de temps final ; et

un dispositif de commande (144) pour commander le nombre de pas de temps réalisés par le système de récupération de mémoire itératif (120) jusqu'au pas de temps final ;

dans lequel le système de récupération de mémoire itératif (120) comprend :

un sous-système d'attention souple (122) configuré pour déterminer, à partir de l'interrogation actuelle, un ensemble de valeurs d'attention souple, une pour chacun de l'ensemble d'emplacements de mémoire (112), et pour déterminer un ensemble de pondérations pour l'ensemble d'emplacements de mémoire (122) à partir d'une combinaison de l'ensemble de valeurs d'attention souple ; et un sous-système de mise à jour d'interrogation (124) pour appliquer l'ensemble de pondérations à des valeurs dérivées à partir des représentations des éléments de connaissance dans les emplacements de mémoire pour déterminer le résultat d'interrogation, dans lequel l'interrogation actuelle est définie par l'interrogation d'entrée à un pas de temps initial et dépend ensuite du résultat d'interrogation à partir du pas de temps précédent ; et dans lequel la mémoire stocke des représentations encodées d'images et le système est configuré pour utiliser la sortie de système de mémoire pour réaliser une tâche de réponse à une question visuelle, dans lequel l'interrogation d'entrée définit une question concernant des relations entre les images qui n'est pas explicitement représentée dans la mémoire et la sortie de système de mémoire du système de mémoire à base de réseau neuronal mis en œuvre par ordinateur définit une réponse à la question.

2. Système selon la revendication 1, dans lequel le dispositif de commande (140) comprend un sous-système de réseau neuronal de commande (144) configuré pour recevoir des observations (146) à partir du système de récupération de mémoire itératif (120) et a une sortie de commande d'arrêt (142), dans lequel les observations (146) définissent un changement dans le résultat d'interrogation entre les pas de temps, et dans lequel le dispositif de commande (140) est configuré pour arrêter le système de récupération de mémoire itératif (120), à l'aide de la sortie de commande d'arrêt (142), pour commander le nombre de pas de temps réalisés jusqu'au pas de temps final ; et

dans lequel les observations (146) à chaque pas de temps comprennent un décompte d'un nombre de pas de temps effectués.

3. Système selon l'une quelconque des revendications 1 et 2 dans lequel le dispositif de commande (140) comprend un sous-système de réseau neuronal de dispositif de commande d'apprentissage par renforcement pour définir une probabilité d'arrêt du système de récupération de mémoire itératif (120) pour la sortie de commande d'arrêt.

4. Système selon la revendication 3 comprenant en outre un moteur d'entraînement (150) pour entraîner le sous-système de réseau neuronal de dispositif de commande d'apprentissage par renforcement à l'aide d'une technique d'apprentissage par renforcement avec une fonction de perte dépendant d'un décompte d'un nombre de pas de temps effectués jusqu'au pas de temps final ; et éventuellement

dans lequel le sous-système de réseau neuronal de dispositif de commande d'apprentissage par renforcement est configuré pour estimer un retour actualisé dans le temps résultant de l'arrêt du système de récupération de mémoire itératif (120) à un pas de temps, et dans lequel la fonction de perte est dépendante du retour actualisé dans le temps ; et éventuellement

dans lequel la technique d'apprentissage par renforcement est une technique d'apprentissage par renforcement basée sur le gradient de politique et dans lequel la fonction de perte est en outre dépendante d'une estimation de valeur générée par le sous-système de réseau neuronal de dispositif de commande d'apprentissage par renforcement pour le pas de temps.

5. Système selon l'une quelconque des revendications 1 à 4, configuré pour déterminer une paire clé-valeur représentant chacun des éléments de connaissance, dans lequel le sous-système d'attention souple est configuré pour déterminer une mesure de similarité entre l'interrogation actuelle et la clé pour chaque emplacement de mémoire (112) pour déterminer l'ensemble de valeurs d'attention souple, et dans lequel le sous-système de mise à jour d'interrogation (124) est configuré pour appliquer l'ensemble de pondérations aux valeurs représentant les éléments de connaissance dans chacun des emplacements de mémoire (112) pour déterminer le résultat d'interrogation ; et dans lequel le système de récupération de mémoire itératif (120) est configuré pour appliquer des matrices de projection de clé et de valeur respectives à la représentation de l'élément de connaissance dans un emplacement de mémoire (112) pour déterminer la paire clé-valeur représentant l'élément de connaissance dans l'emplacement de mémoire (112).

6. Système selon l'une quelconque des revendications 1 à 5, dans lequel le système de récupération de mémoire itératif (120) est configuré pour appliquer une matrice de projection d'interrogation à l'interrogation d'entrée (114) pour fournir une interrogation encodée, dans lequel l'interrogation encodée comprend l'interrogation actuelle définie par l'interrogation d'entrée (114) au pas de temps initial.

7. Système selon l'une quelconque des revendications 1 à 6, dans lequel le sous-système d'attention souple (112) comprend un réseau neuronal d'attention souple pour traiter l'ensemble de valeurs d'attention souple pour déterminer l'ensemble de pondérations pour l'ensemble d'emplacements de mémoire (112).

8. Système selon l'une quelconque des revendications 1 à 7, dans lequel le système de sortie (130) comprend un réseau neuronal de sortie (130a) pour traiter le résultat d'interrogation pour générer la sortie de système de mémoire (160).

9. Système selon l'une quelconque des revendications 1 à 8, comprenant en outre un sous-système de réseau neuronal encodeur (104a) pour encoder des données d'éléments de connaissance pour les éléments de connaissance dans les représentations des éléments de connaissance pour un stockage dans l'un des emplacements de mémoire (112).

10. Système selon la revendication 9, dans lequel le sous-système de réseau neuronal encodeur (104a) comprend un réseau neuronal convolutif ; et/ou

dans lequel le sous-système de réseau neuronal encodeur (104a) comprend un réseau neuronal récurrent.

11. Procédé mis en œuvre par ordinateur d'entraînement du système selon l'une quelconque des revendications 3 ou 4, ou 5 à 10 lorsqu'elles dépendent de la revendication 3 ou 4, le procédé comprenant l'entraînement du sous-système de réseau neuronal de dispositif de commande d'apprentissage par renforcement à l'aide d'un procédé d'apprentissage par renforcement pour commander le nombre de pas de temps effectués par le système de récupération de mémoire itératif (120) jusqu'au pas de temps final ; et

dans lequel l'entraînement comprend, à chacune d'une pluralité d'itérations d'entraînement :

l'obtention d'une observation (146) du système de récupération de mémoire itératif (120), dans lequel l'observation (146) définit un changement dans le résultat d'interrogation entre un pas de temps actuel et un pas de temps précédent ;

le traitement de l'observation à l'aide du sous-système de réseau neuronal de dispositif de commande d'apprentissage par renforcement, et conformément à des valeurs actuelles de paramètres du sous-système de réseau neuronal de dispositif de commande d'apprentissage par renforcement, pour générer un signal de politique de commande d'arrêt ;

la détermination d'un gradient sur la base du signal de politique de commande d'arrêt, d'un retour réel sur un ou plusieurs des pas de temps et d'une valeur dépendante d'un nombre de pas de temps effectués jusqu'au pas de temps actuel, où le retour réel est dépendant de la sortie de système de mémoire (160) pour un ou plusieurs des pas de temps ; et

le réglage de valeurs des paramètres du sous-système de réseau neuronal de dispositif de commande d'apprentissage par renforcement à l'aide du gradient.

12. Procédé mis en œuvre par ordinateur d'entraînement du système selon l'une quelconque des revendications 1 à 10, comprenant l'entraînement du sous-système d'attention souple (122) et du sous-système de mise à jour d'interrogation (124) à l'aide d'une technique d'entraînement supervisée.

13. Un ou plusieurs supports de stockage informatique stockant des instructions qui, lorsqu'elles sont exécutées par un ou plusieurs ordinateurs, amènent les un ou plusieurs ordinateurs à mettre en œuvre le système selon l'une quelconque des revendications 1 à 10 ou le procédé selon l'une quelconque des revendications 11 ou 12.

KNOWLEDGE ITEM
DATA 102

QUERY 114

120

ITERATIVE MEMORY RETRIEVAL SYSTEM

| ENCODER 104 | | MEMORY | 110 |
| ENCODER NEURAL NETWORK SUBSYSTEM 104a | | $c_1$ | 112 |
| | | $c_2$ | |
| | | $c_i$ | 112 |

$c_i$

KEYS, VALUES

$Q_t$ — 122

$Q_t$ — 124

SOFT ATTENTION SUBSYSTEM

$K$

$Wt$

QUERY UPDATE SUBSYSTEM

$V$

$Q_{t+1}$

OBSERVATIONS 146

$Q_{t+1}$

150

TRAINING ENGINE

CONTROLLER

144

140

CONTROLLER NEURAL NETWORK SUBSYSTEM

HALTING CONTROL 142

OUTPUT SYSTEM

130

OUTPUT NEURAL NETWORK 130a

$a$

MEMORY SYSTEM OUTPUT 160

# Figure 1

200

INPUT KNOWLEDGE ITEM DATA

REPEAT
UNTIL SET
ENCODED

202

ENCODE KNOWLEDGE ITEM DATA INTO
REPRESENTATIONS OF KNOWLEDGE ITEMS
($c_i$) AND STORE IN MEMORY

204

PROCESS REPRESENTATIONS OF
KNOWLEDGE ITEMS TO DETERMINE KEY-
VALUE REPRESENTATIONS

# Figure 2

300

INPUT QUERY AND ENCODE INTO INITIAL
QUERY EMBEDDING ($Q_0$)

302

DETERMINE QUERY RESULT AND CURRENT
QUERY FOR NEXT TIME STEP ($Q_{t+1}$)

NO HALT

304

DETERMINE ANSWER $a_t$ FOR TIME STEP FROM
CURRENT QUERY FOR NEXT TIME STEP ($Q_{t+1}$)

306

PROCESS OBSERVATIONS OF THE ITERATIVE
RETRIEVAL PROCESS TO DETERMINE THE
CONTROLLER HALTING CONTROL OUTPUT

HALT

308

PROCESS FINAL QUERY RESULT TO
DETERMINE MEMORY SYSTEM OUTPUT

# Figure 3

400

OBTAIN SET OF TRAINING ITEMS

FOR EACH
TRAINING ITEM

402

PROCESS TRAINING ITEM TO PREDICT AN
ANSWER

404

EVALUATE LOSS FUNCTION USING CORRECT
ANSWER AND BACK PROPAGATE GRADIENT

406

TRAIN CONTROLLER NEURAL NETWORK
SUBSYSTEM USING REINFORCEMENT
LEARNING

# Figure 4

Figure 5a

$A_1B_1$

$A_2B_2$

$B_1C_1$

$B_2C_2$

Figure 5b

$B_1$

$A_1$

$B_2$

$C_2$

$B_1$

$C_1$

$C_1$

$A_1$

$C_2$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GENG et al.** Adaptive Multi-pass Decoder for Neural Machine Translation. *Proc. 2018 Conference on Empirical Methods In Natural Language Processing*, 01 January 2018, 523-532

- **SRIVASTAVA et al.** *Journal of Machine Learning Research*, 2014, vol. 15, 1929-1958
- **WILLIAMS, R.J**. Simple statistical gradient-following algorithms for connectionist reinforcement learning. *Mach Learn*, 1992, vol. 8, 229-256